# EUROPÄISCHE PATENTANMELDUNG

(11) **EP 1 783 029 A1**
(43) Veröffentlichungstag der Anmeldung: **09.05.2007**
(21) Anmeldenummer: 06019832.2
(22) Anmeldetag: 22.09.2006
(51) Int. Cl.: B62D 1/06, B60H 1/00, B62D 1/10

(54) **Vorrichtung für ein Lenksystem, insbesondere eines Kraftfahrzeugs**

(30) Priorität: 03.11.2005 DE 102005053182
(71) Anmelder: Valeo Schalter und Sensoren GmbH, 74321 Bietigheim-Bissingen (DE)
(72) Erfinder: Ruetz, Christian, 71636 Ludwigsburg (DE)
(74) Vertreter: Thielking, Klaus

(57) **Zusammenfassung**

Die Erfindung betrifft eine Vorrichtung (2) für ein Lenksystem eines Kraftfahrzeugs mit einem einen Griffbereich (6) aufweisenden Lenkrad (4), wobei der Griffbereich (6) mindestens einen Hohlraum (44) aufweist, der zur Durchströmung mit einem temperierten Strömungsmedium ausgebildet ist.

## Beschreibung

Die Erfindung betrifft eine Vorrichtung für ein Lenksystem eines Kraftfahrzeugs, mit einem einen Griffbereich aufweisenden Lenkrad.

Aus Vorbenutzungen sind Lenkräder bekannt, die integrierte Heizspiralen aufweisen. Diese dienen dazu, den Griffbereich des Lenkrads zu erwärmen, so dass dieser angenehm temperiert ist. Die Heizspiralen haben den Nachteil, dass hohe Ströme im Bereich von 7 bis 8 A notwendig sind, um eine zufriedenstellende Heizwirkung erzielen zu können. Für die Stromversorgung des sich drehenden Lenkrads werden sogenannte Wickelfedern verwendet, die vergleichsweise verschleißanfällig sein können. Die Wickelfedern können auch Quelle für unerwünschte Geräusche sein.

Hiervon ausgehend liegt der vorliegenden Erfindung die Aufgabe zugrunde, eine Vorrichtung für ein Lenksystem eines Kraftfahrzeugs zu schaffen, mit der das Lenkrad unter Verzicht auf Verwendung einer Wickelfeder temperierbar ist.

Diese Aufgabe wird erfindungsgemäß dadurch gelöst, dass der Griffbereich mindestens einen Hohlraum aufweist, der zur Durchströmung mit einem temperierten Strömungsmedium ausgebildet ist.

Die erfindungsgemäße Vorrichtung hat eine Reihe von Vorteilen. Auf die eingangs erwähnten Wickelfedern und Heizspiralen kann verzichtet werden, da die Temperierung des Griffbereichs über das in dem Hohlraum strömende Medium erfolgt. Gleichzeitig kann die Temperierung des Strömungsmediums (beispielsweise Luft oder Wasser) so erfolgen, dass entweder ein Erwärmen des Griffbereichs oder ein Abkühlen des Griffbereichs ermöglicht ist. Gegenüber einem mit Heizspiralen erwärmbaren Griffbereich ergibt sich also die zusätzliche Möglichkeit der Kühlung des Lenkrads. Dies ist insbesondere deshalb vorteilhaft, da sich Oberflächen in einem unter Direkteinstrahlung der Sonne stehenden Kraftfahrzeuginnenraum auf bis zu 100°C erhitzen können. Der Fahrer eines Kraftfahrzeugs versucht bei einem solchen überhitzten Fahrzeug, sich von den heißen Oberflächen möglichst fernzuhalten. Dies ist zum Führen des Kraftfahrzeugs aber gerade bei dem Lenkrad nicht möglich.

In Weiterbildung der Erfindung ist der Hohlraum der Geometrie des Griffbereichs angepasst. Hierdurch ist gewährleistet, dass eine Kühlung oder Erwärmung in allen Bereichen des Lenkrads erfolgen kann, mit denen die Hände eines Fahrers des Kraftfahrzeugs in Berührung kommen.

Der Hohlraum kann zumindest abschnittsweise ringförmig ausgebildet sein, um bei Lenkrädern mit einem umlaufenden Lenkradkranz für eine gut verteilte Kühlung und/oder Heizung zu sorgen.

Es ist im Rahmen der Erfindung möglich, dass der Hohlraum mit einer Zuleitung und einer Ableitung für Strömungsmedium verbunden ist, so dass beispielsweise heißes Strömungsmedium dem Hohlraum zugeleitet wird, die Wärme an den Griffbereich abgegeben wird und das abgekühlte Strömungsmedium abgeführt werden kann. Entsprechend kann kühles Strömungsmedium zugeführt werden, um dem Griffbereich Wärme zu entziehen und um das solchermaßen erwärmte Strömungsmedium wiederum abzuleiten.

Es ist im Rahmen der Erfindung aber auch möglich, dass der Griffbereich mit dem Hohlraum fluidisch in Verbindung stehende, nach außen weisende Öffnungen aufweist. In diesem Fall wird das Strömungsmedium, beispielsweise Luft, über den Hohlraum den Öffnungen zugeleitet, aus denen die Luft ausströmen kann. Hierdurch wird der Griffbereich des Lenkrads entweder gekühlt oder erwärmt. Bei einer genügend starken Strömung kann das Medium gleichzeitig die den Griffbereich berührenden Hände des Fahrers des Kraftfahrzeugs kühlen oder erwärmen.

Die Öffnungen können in einem Trägerkörper des Griffbereichs angeordnet sein. Hierdurch ist gewährleistet, dass das Strömungsmedium aus dem Hohlraum bis zu den Öffnungen gelangen kann. Es ist möglich, dass der Trägerkörper von einem strömungsdichten Lenkradbezug umgeben ist. Dieser kann durch den Kontakt mit den Öffnungen, die wiederum mit dem Hohlraum in Verbindung stehen, mit Hilfe des Strömungsmediums erwärmt oder abgekühlt werden.

Es ist aber auch möglich, dass die Öffnungen in einem den Trägerkörper zumindest abschnittsweise umhüllenden Lenkradbezug angeordnet sind. In diesem Fall kann das Strömungsmedium aus dem Lenkradbezug heraustreten und somit den Griffbereich temperieren. Bei genügend hoher Strömung können auch die Hände des Fahrers temperiert werden.

Der Trägerkörper und/oder der Lenkradbezug können aus einem offenporigen Material gebildet sein. Hierfür kommen beispielsweise Metall- oder Kunststoffschäume, Leder oder Textilien in Frage. Auch die Verwendung von Klimamembranen ist denkbar.

Nach einer Ausführungsform der Erfindung ist der Griffbereich über mindestens einen Verbindungsabschnitt zumindest mittelbar mit der Lenkradnabe des Lenkrads verbunden, wobei in dem Verbindungsabschnitt mindestens eine mit dem Hohlraum fluidisch in Verbindung stehende Leitung für das temperierte Strömungsmedium vorgesehen ist. Auf diese kann die Versorgung des Hohlraums mit Strömungsmedium in einem zentrischen Bereich des Lenkrads erfolgen. Hierdurch wird die Versorgung des Hohlraums mit Strömungsmedium erleichtert.

Es ist vorteilhaft, wenn die Lenkradnabe einen der Leitung des Verbindungsabschnitts fluidisch vorgeschalteten, insbesondere ringförmigen Verteiler aufweist. In diesem Fall kann ein Anschluss des Strömungsmediums an das sich drehende Lenkrad und an den sich mitdrehenden Hohlraum über eine einfache Zuleitung erfolgen, die über den Verteiler ständig mit der mindestens einen Leitung des Verbindungsabschnitts in Verbindung steht. Es ist aber auch möglich, dass die Versorgung der Leitung bzw. des Hohlraums nur in bestimmten Lenkradstellungen erfolgt und kein ringförmiger Verteiler verwendet wird.

Wenn die Leitung des Verbindungsabschnitts und so der Verteiler von einer ortsfesten Zuleitung gespeist ist, kann der das Lenkrad mit Strömungsmedium versorgende Anschlussbereich starre Leitungen aufweisen, wodurch auf biegeschlaffe Schläuche, die prinzipiell auch zum Einsatz kommen könnten, verzichtet werden kann.

Diese ortsfeste Zuleitung kann in einem die Lenkradnabe aufnehmenden Träger angeordnet sein. Hierdurch erfüllt ein Bauteil, das zur Lagerung des Lenkrads ohnehin erforderlich ist, gleichzeitig die Funktion der Versorgung des Griffbereichs mit Strömungsmedium. Der oben beschriebene, insbesondere ringförmige Verteiler kann zusätzlich oder optional auch in oder an dem Träger vorgesehen sein.

In vorteilhafter Weise ist die ortsfeste Zuleitung und/oder der in oder an dem Träger vorgesehene Verteiler gegenüber der Leitung des Verbindungsabschnitts und/oder dem in der Lenkradnabe vorgesehenen Verteiler durch Dichtelemente abgedichtet. Je nach Wahl des Strömungsmediums ist eine solche Abdichtung jedoch nicht unbedingt erforderlich. Beispielsweise kann es bei Verwendung von Luft als Strömungsmedium durchaus vertretbar sein, eine gewisse Leckage zuzulassen, beispielsweise wenn dadurch die Vorrichtung einfacher aufgebaut werden kann. Bei Verwendung der genannten Dichtelemente kann der Wirkungsgrad der Vorrichtung erhöht werden. Wenn das Strömungsmedium dem Hohlraum in oben beschriebener Weise zugeführt und aus diesem abgeführt wird, ist durch die Verwendung von Dichtelementen gewährleistet, dass das Strömungsmedium nicht in den Innenraum des Kraftfahrzeugs gelangt.

Die Vorrichtung kann eine, insbesondere eigenständige Kühl- und/oder Heizeinrichtung zur Temperierung des Strömungsmediums umfassen. Hierdurch ist es möglich, die Temperierung des Griffbereichs genau einstellen zu können. Selbstverständlich ist es auch möglich, durch Verwendung von Temperatursensoren und mit Hilfe einer Regeleinrichtung die Temperatur des Strömungsmediums nicht nur einzustellen, sondern auch zu regeln.

In ganz besonders vorteilhafter Weise umfasst die Kühl- und/oder Heizeinrichtung die Klimaanlage oder -automatik des Kraftfahrzeugs. In diesem Fall ist keine separate Kühleinrichtung erforderlich, um das Strömungsmedium auf die gewünschte Temperatur abzukühlen.

Es ist ferner sehr vorteilhaft, wenn die Kühl- und/oder Heizeinrichtung die Fahrgastzellenbelüftung des Kraftfahrzeugs umfasst. Somit können die für einen Transport von Luft ohnehin zur Verfügung stehenden Gebläse und/oder Luftführungskanäle mit dem zu temperierenden Lenkrad gekoppelt werden, ohne dass weitere Elemente zum Transport des Strömungsmediums erforderlich sind.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein.

In der Zeichnung zeigen:
- Figur 1: eine perspektivische, teilweise geschnittene Ansicht einer erfindungsgemäßen Vorrichtung;
- Figur 2: eine rückwärtige perspektivische Ansicht eines Ausschnitts der Vorrichtung gemäß Figur 1;
- Figur 3: einen in Figur 1 mit III markierten Ausschnitt;
- Figur 4: einen in Figur mit IV markierten Ausschnitt;
- Figur 5: eine Vorderansicht des Lenkrads der Vorrichtung gemäß Figur 1; und
- Figur 6: einen in Figur 5 mit VI markierten Ausschnitt.

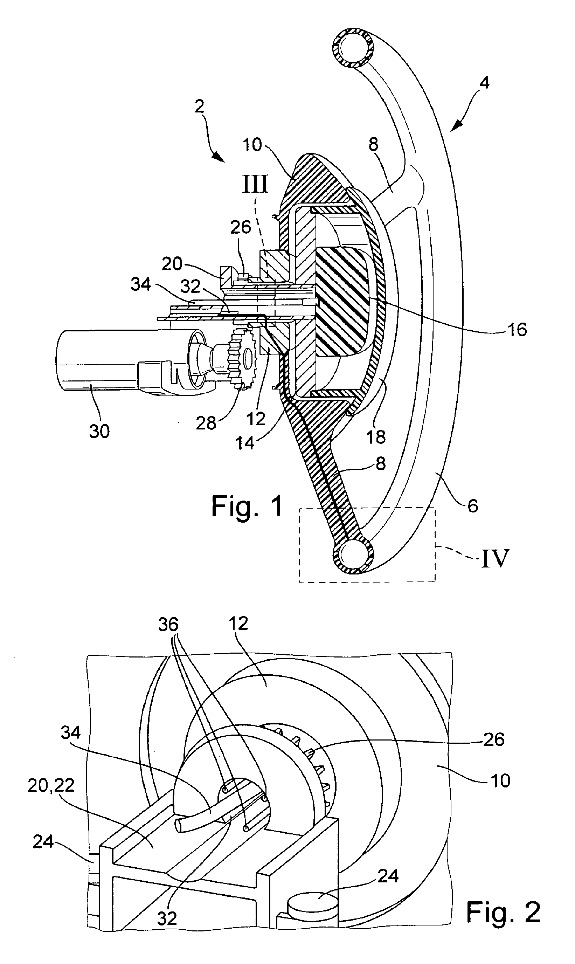

In Figur 1 ist eine Vorrichtung für ein Lenksystem eines Kraftfahrzeugs insgesamt mit dem Bezugszeichen 2 bezeichnet. Diese weist ein Lenkrad 4 mit einem umlaufenden Griffbereich 6 auf. Der Griffbereich 6 ist über als Speichen ausgebildete Verbindungsabschnitte 8 mit einem zentrischen Grundkörper 10 des Lenkrads 4 verbunden.

Das Lenkrad 4 bzw. dessen Grundkörper 10 ist mit einer Lenkradnabe 12 verbunden. Die Lenkradnabe 12 sowie eine in dem Grundkörper 10 ausgebildete Ausnehmung dienen zur Aufnahme einer Halteplatte 14 für einen Airbag 16. Dieser ist mit einer Abdeckung 18 überdeckt.

Die Lenkradnabe 12 ist über nur schematisch dargestellte Lager (ohne Bezugszeichen) drehbar an einem Träger 20 gelagert. Der Träger 20 ist auch in Figur 2 dargestellt und weist einen Sockel 22 auf, der über Befestigungselemente 24 an der Karosseriestruktur eines nicht weiter dargestellten Kraftfahrzeugs befestigt ist.

Der Airbag 16 ist ortsfest, dreht also nicht mit dem Lenkrad 4 mit. Der Airbag 16 ist über die Halteplatte 14 mit dem Träger 16 verbunden. Auch die Abdeckung 18 ist ortsfest und mit der Halteplatte 14 verbunden.

Die Lenkradnabe 12 ist drehfest mit einem ersten Zahnrad 26 verbunden, das mit einem zweiten Zahnrad 28 kämmt, welches wiederum drehfest mit einer nur abschnittsweise dargestellten Lenkwelle 30 verbunden ist.

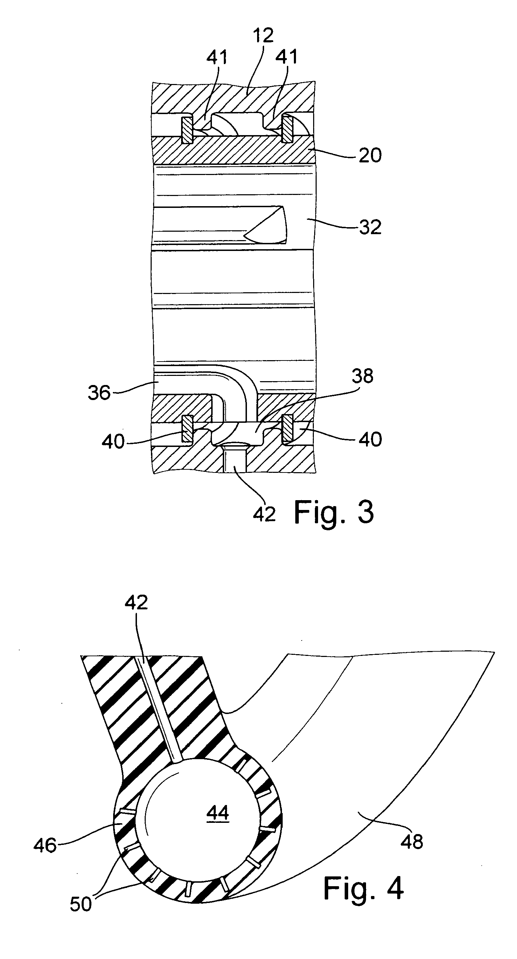

Der Träger 20 weist einen sich in Richtung auf den Airbag 16 erstreckenden hohlzylindrischen Abschnitt 32 auf. In diesem ist eine elektrische Kontaktierung 34 des Airbags 16 angeordnet. Die elektrische Kontaktierung 34 umgebend sind in dem hohlzylindrischen Abschnitt 32 insgesamt drei Zuleitungen 36 für ein Strömungsmedium (beispielsweise Kühlluft oder Heizluft) vorgesehen. Die Zuleitungen 36 erstrecken sich, wie in Figuren 1 und 3 dargestellt, parallel zur Lenkachse des Lenkrads 4 und münden auf ihrer dem Lenkrad 4 zugewandten Seite nach radial außen in einen ringförmigen Verteiler 38, der in der Lenkradnabe 12 ausgebildet ist. Die Zuleitungen 36 und der Verteiler 38 sind über ringförmige Dichtelemente 40 gegeneinander abgedichtet. Diese sind an dem Träger 20 gelagert und wirken mit an der Lenkradnabe 12 ausgebildeten, ringförmigen Stegen 41 zusammen.

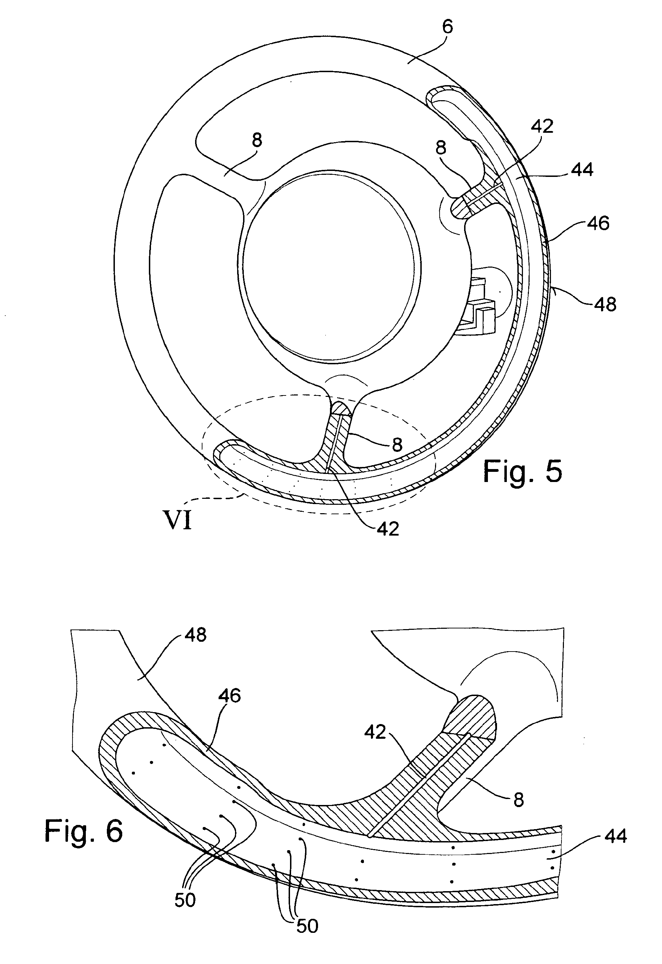

Der ringförmige Verteiler 38 steht fluidisch mit Leitungen 42 in Verbindung, die jeweils in den Verbindungsabschnitten 8 des Lenkrads 4 vorgesehen sind. Die Leitungen 42 erstrecken sich von dem Verteiler 38 durch die Lenkradnabe 12 hindurch hin zum Grundkörper 10 und von diesem übergehend in die Verbindungsabschnitte 8. Die Leitungen 42 münden radial außen in einem ringförmigen Hohlraum 44, der in dem Griffbereich 6 des Lenkrads 4 vorgesehen ist (vgl. Figuren 4 bis 6). Der Griffbereich 6 weist einen torusförmigen Trägerkörper 46 auf, der von einem Lenkradbezug 48 ummantelt ist. In dem Trägerkörper 46 sind sich vom Hohlraum 44 ausgehend nach außen erstreckende Öffnungen 50 vorgesehen, die an dem luftdurchlässigen Lenkradbezug 48 münden. Die Öffnungen 50 sind vergleichsweise klein, so dass sie die mechanische Stabilität des Lenkrads 4 nur unwesentlich beeinflussen. Wie insbesondere aus Figur 4 und Figur 6 ersichtlich, sind die Öffnungen 50 bezogen auf verschiedene Winkelstellungen des Lenkrads 4 jeweils entlang eines Rings angeordnet. Diese ringförmige Verteilung von Öffnungen 50 wiederholt sich in regelmäßigen Abständen, beispielsweise alle zehn Grad.

Die Zuleitungen 36 der Vorrichtung 2 stehen mit einer nicht weiter dargestellten Fahrgastzellenbelüftung des Kraftfahrzeugs in Verbindung. Diese wiederum steht in Verbindung mit einer nicht dargestellten Klimaanlage oder -automatik des Kraftfahrzeugs. Über die Zuleitungen 36 kann gekühlte oder erwärmte Luft dem Verteiler 38, den Leitungen 42 und dem Hohlraum 44 zugeführt werden. Von dort aus gelangt die Luft über die Öffnungen 50 in die Umgebung des Griffbereichs 6.

Mit der Vorrichtung 2 kann der Griffbereich 6 eines Lenkrads 4 entsprechend den Wünschen eines Fahrers des Kraftfahrzeugs temperiert, d. h. gekühlt und/oder erwärmt werden.

## Patentansprüche

1. Vorrichtung (2) für ein Lenksystem eines Kraftfahrzeugs, mit einem einen Griffbereich (6) aufweisenden Lenkrad (4), **dadurch gekennzeichnet, dass** der Griffbereich (6) mindestens einen Hohlraum (44) aufweist, der zur Durchströmung mit einem temperierten Strömungsmedium ausgebildet ist.

2. Vorrichtung (2) nach Anspruch 1, **dadurch gekennzeichnet, dass** der Hohlraum (44) der Geometrie des Griffbereichs (6) angepasst ist.

3. Vorrichtung (2) nach Anspruch 1 oder 2, **dadurch gekennzeichnet, dass** der Hohlraum (44) zumindest abschnittsweise ringförmig ausgebildet ist.

4. Vorrichtung (2) nach einem der vorhergehenden Ansprüche, **dadurch gekennzeichnet, dass** der Griffbereich (6) mit dem Hohlraum (44) fluidisch in Verbindung stehende, nach außen weisende Öffnungen (50) aufweist.

5. Vorrichtung (2) nach Anspruch 4, **dadurch gekennzeichnet, dass** die Öffnungen (50) in einem Trägerkörper (46) des Griffbereichs (6) angeordnet sind.

6. Vorrichtung (2) nach Anspruch 4 oder 5, **dadurch gekennzeichnet, dass** die Öffnungen (50) in einem den Trägerkörper (46) zumindest abschnittsweise umhüllenden Lenkradbezug (48) angeordnet sind.

7. Vorrichtung (2) nach einem der Ansprüche 4 bis 6, **dadurch gekennzeichnet, dass** der Trägerkörper (46) und/oder der Lenkradbezug (48) aus einem offenporigen Material gebildet sind.

8. Vorrichtung (2) nach einem der vorhergehenden Ansprüche, **dadurch gekennzeichnet, dass** der Griffbereich (6) über mindestens einen Verbindungsabschnitt (8) zumindest mittelbar mit der Lenkradnabe (12) des Lenkrads (4) verbunden ist und dass in dem Verbindungsabschnitt (8) mindestens eine mit dem Hohlraum (44) fluidisch in Verbindung stehende Leitung (42) für das temperierte Strömungsmedium vorgesehen ist.

9. Vorrichtung (2) nach Anspruch 8, **dadurch gekennzeichnet, dass** die Lenkradnabe (12) einen der Leitung (42) des Verbindungsabschnitts (8) fluidisch vorgeschalteten, insbesondere ringförmigen Verteiler (38) aufweist.

10. Vorrichtung (2) nach Anspruch 8 oder 9, **dadurch gekennzeichnet, dass** die Leitung (42) des Verbindungsabschnitts (8) und/oder der Verteiler (38) von einer ortsfesten Zuleitung (36) gespeist ist.

11. Vorrichtung (2) nach Anspruch 10, **dadurch gekennzeichnet, dass** die ortsfeste Zuleitung (36) in einem die Lenkradnabe (12) aufnehmenden Träger (20) angeordnet ist.

12. Vorrichtung (2) nach Anspruch 11, **dadurch gekennzeichnet, dass** der Träger (20) einen der Leitung (42) des Verbindungsabschnitts (8) fluidisch vorgeschalteten, insbesondere ringförmigen Verteiler aufweist.

13. Vorrichtung (2) nach mindestens einem der Ansprüche 10 bis 12, **dadurch gekennzeichnet, dass** die ortsfeste Zuleitung (36) und/oder der Verteiler des Trägers (20) gegenüber der Leitung (42) des Verbindungsabschnitts (8) und/oder dem Verteiler (38) der Lenkradnabe (12) durch Dichtelemente (40) abgedichtet sind.

14. Vorrichtung (2) nach einem der vorhergehenden Ansprüche, **dadurch gekennzeichnet, dass** die Vorrichtung (2) eine Kühl- und/oder Heizeinrichtung zur Temperierung des Strömungsmediums umfasst.

15. Vorrichtung (2) nach Anspruch 14, **dadurch gekennzeichnet, dass** die Kühl- und/oder Heizeinrichtung die Klimaanlage oder -automatik des Kraftfahrzeugs umfasst.

16. Vorrichtung (2) nach Anspruch 14 oder 15, **dadurch gekennzeichnet, dass** die Kühl- und/oder Heizeinrichtung die Fahrgastzellenbelüftung des Kraftfahrzeugs umfasst.

17. Vorrichtung (2) nach mindestens einem der vorhergehenden Ansprüche, **dadurch gekennzeichnet, dass** die Vorrichtung (2) einen nicht mit dem Lenkrad (4) mitdrehenden, ortsfesten Airbag (16) aufweist.

18. Vorrichtung (2) nach Anspruch 17, **dadurch gekennzeichnet, dass** der Airbag (16) mit dem die Lenkradnabe (12) aufnehmenden Träger (20) verbunden ist.
